# EUROPEAN PATENT APPLICATION

(11) **EP 1 545 117 A2**
(43) Date of publication of application: **22.06.2005**
(21) Application number: 04029236.9
(22) Date of filing: 09.12.2004
(51) Int. Cl.: H04N 1/00

(54) **Scanner apparatus, method for controlling scanner apparatus and multifunction apparatus**

(30) Priority: 18.12.2003 JP 2003421330; 18.12.2003 JP 2003421344
(71) Applicant: MATSUSHITA ELECTRIC INDUSTRIAL CO., LTD., Kadoma-shi, Osaka 571-8501 (JP)
(72) Inventor: Fukuda, Hikaru, Utsunomiya-shi Tochigi 321-0973 (JP); Ueno, Ikuo, Ueda-shi Nagano 386-1106 (JP)
(74) Representative: Grünecker, Kinkeldey, Stockmair & Schwanhäusser Anwaltssozietät

(57) **Abstract**

A network scanner apparatus that obtains scanned image data quickly and efficiently by reducing the time that elapses between the start of document scanning and the end of the scanned image data transfer when scanned image data is transferred to a destination in a network. The network scanner apparatus includes a scanner that scans multiple pages of a document, and a controller that begins the transfer of scanned image data before completing the scanning of a multiple page document.

## Description

### BACKGROUND OF THE INVENTION

### 1. Field of the Invention

The present invention relates to a scanner apparatus and a method for controlling a scanner apparatus which transfers, to a terminal device or other such device, data, data being scanned from an original document, and also relates to a multifunction apparatus to which the scanner device is installed.

### 2. Description of Related Art

Conventionally, in a processing procedure of scanned data, the processing procedure being utilized in order that a terminal may obtain data from a scanner through a network, it was required to increase the transfer speed of data sent from a scanner apparatus to a terminal device. For example, a scanner apparatus scans data, compresses the scanned data, and transmits the compressed data to a terminal device via a network . The terminal device receives the transmitted data, stored the received data, decompresses the stored data, and transfers the decompressed data to a software application (see Related Art 1).

The above-noted processing procedure of scanned data could increase the transfer speed of data sent from the scanner to the terminal because the transfer speed on the network need not be matched to the read-in speed of the application software in the receiving terminal device, nor to the decompression speed of the decompression section. Furthermore, in a case that the scanned data is stored and that the stored data can selectively be read out by each single page or by multiple pages, when data is selected to read out by each single page, the user is able to easily select any page for transferring to the software application.

### [Related Art 1]

### Japanese Kokai Patent H11-168609

However, the technology described by the above-noted Related Art 1 can not transmit the scanned data through the network until all of the documents have completely been scanned, when multiple original document pages are scanned. As a result, this type of processing procedure of scanned data is inefficient when applied to the scanning of multiple page documents.

### SUMMARY OF THE INVENTION

Taking the above-noted factors into consideration, the present invention provides a scanner apparatus, a method for controlling a scanner apparatus, and multifunction apparatus which can reduce the time that elapses from the start of the scanning operation to the end of transferring the scanned data, and then can faster and more efficiently obtain data, when multiple original document pages are scanned. The scanner apparatus is connected to a terminal device via a network. The scanner apparatus comprises a scanner which scans a plurality of documents and obtains image data of the plurality of documents. The scanner apparatus also comprises a memory which stores the obtained image data. The scanner apparatus comprises a controller which begins transmitting the stored image data to the terminal device via the network, before the image data of all of the plurality of documents is stored in the memory.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Figure 1 is a block diagram of the network to which the network scanner apparatus invention is connected.
Figure 2 is a block diagram of the network scanner apparatus and client computer shown in Figure 1.
Figure 3 is a scanning and transmission timing chart of the network scanner apparatus shown in Figure 2.
Figure 4 is a flow chart illustrating the operational sequence of the network scanner apparatus shown in Figure 2.
Figure 5 is a block diagram of the network to which the network scanning device invention is connected.
Figure 6 is a block diagram of the network scanning device and client computer shown in Figure 5.
Figure 7 is a scanning and transmission timing chart of the network scanning device shown in Figure 6.
Figure 8 is a flow chart illustrating the operational sequence of the network scanning device shown in Figure 6.

### DETAILED DESCRIPTION OF PREFERRED EMBODIMENTS

The embodiments of the present invention are explained in the following, in reference to the above-described drawings.

### First Embodiment

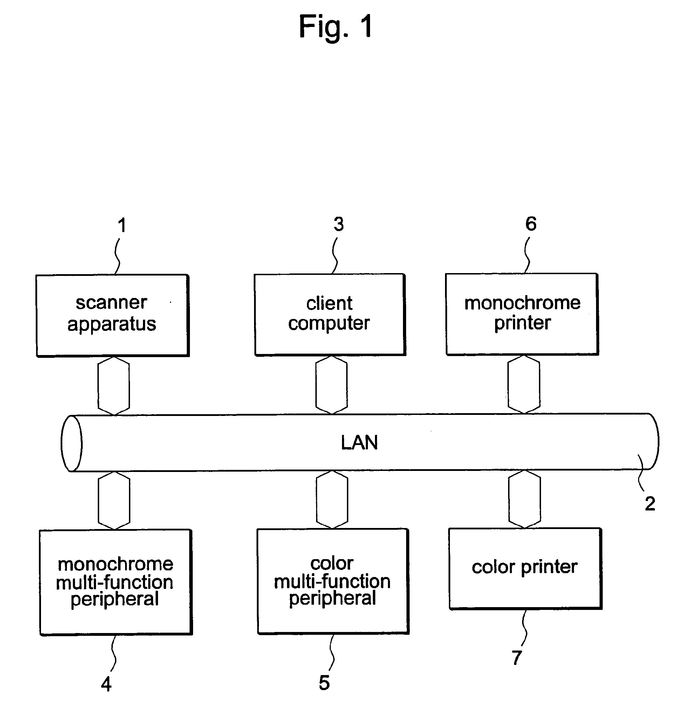

Figure 1 is a block diagram illustrating the structure of a network that includes the network scanner apparatus. Network scanner apparatus 1 is connected to client computer 3, monochrome MFP (Multi-Function Peripherals) 4, color MFP 5, monochrome printer 6, and color printer 7 through a network 2 such as an LAN (Local Area Network). Network scanner apparatus 1 is able to communicate with each of devices 3∼7, through network 2, by using a predetermined communications protocol (for example, TCP/IP (Transmission Control protocol/Internet Protocol) ). Network scanner apparatus 1 is able to scan the original document image and to send the scanned data to a specified device with instruction regarding a processing operation which is applied to the scanned data.

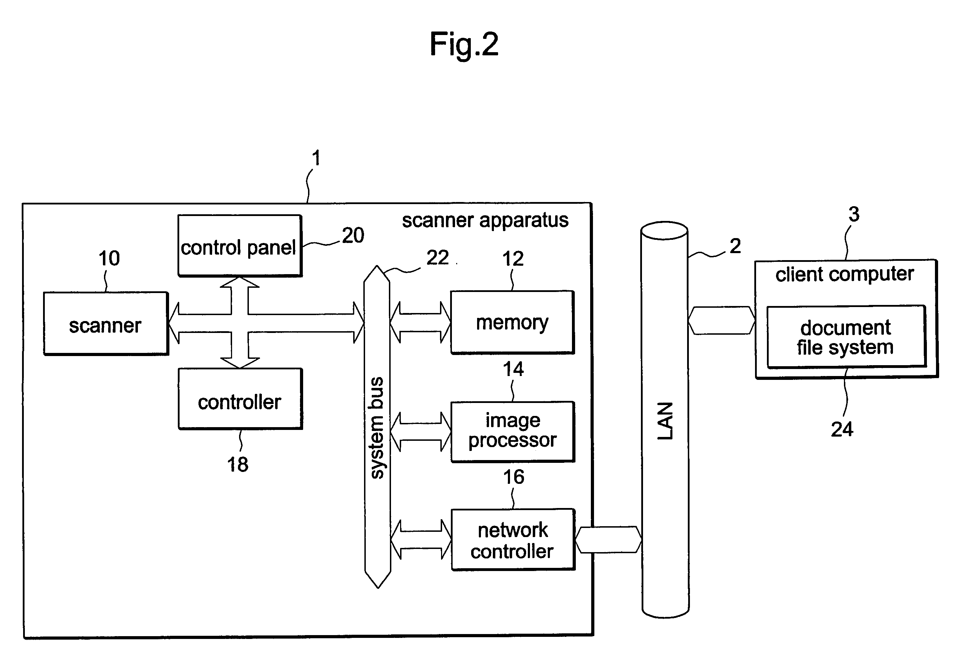

Figure 2 is a block diagram illustrating the general structure of the network scanner apparatus and client computer shown in Figure 1. Network scanner apparatus 1 includes scanner 10, memory 12, image processor 14, network controller 16, controller 18, and control panel 20; each of the aforesaid main components being mutually connected through system bus 22.

Scanner 10 recognizes the type (color or monochrome), size, and number of pages of the original document(s) placed on the original document tray, and then optically scans the document for image data. Memory 12, which may be a flash memory, hard disk, or other like memory device, first stores the image data scanned by scanner 10, and than restores the image data after pre-transfer processing (data compression etc.) has been performed to the stored image data. Image processor 14 performs image processing such as compressing the image data stored in memory 12. Network controller 16 controls the transmission and reception of image data, commands, communications control signals, and the like, for communication with the other devices connected to network 2. Controller 18 is a central processing device that executes generalized control over the operation of the aforementioned devices. Control panel 20, which allows an operator to input commands and operational settings, is equipped with operating keys (a numerical keypad, start button etc. for example), and with a display (i.e. liquid crystal display) that displays various informational items.

Also, client computer 3 manages image data received from network scanner apparatus 1 through document file system 24 which is able to execute various operations such as data processing and image display.

When scanned image data is sent from network scanner apparatus 1 to a destination specified as client computer 3, the original document is first placed on the scanning tray. Then, scanner 10 scans the original document and generates image data (bit units). The image data is sent to memory 12 and is stored in memory 12. Next, the stored image data is compressed into predetermined transfer units by image processor 14 (monochrome image data can be compressed, for example, into JBIG (Joint Bi-level Image experts Group) format, and color images into JPEG (Joint Photographic coding Experts Group) format). The image data compression operation is able to generate a data unit pertaining to a single page, a predetermined number of pages (two pages, for example), or a predetermined amount of data.

Controller 18 sends compressed image data to client computer 3 (destination), through network controller 16, without waiting for scanner 10 to finish scanning all of the document pages. At this time, controller 18 sends image data in units pertaining to the number of pages (single or multiple pages) or to a predetermined data amount, while the scanning operation is in progress.

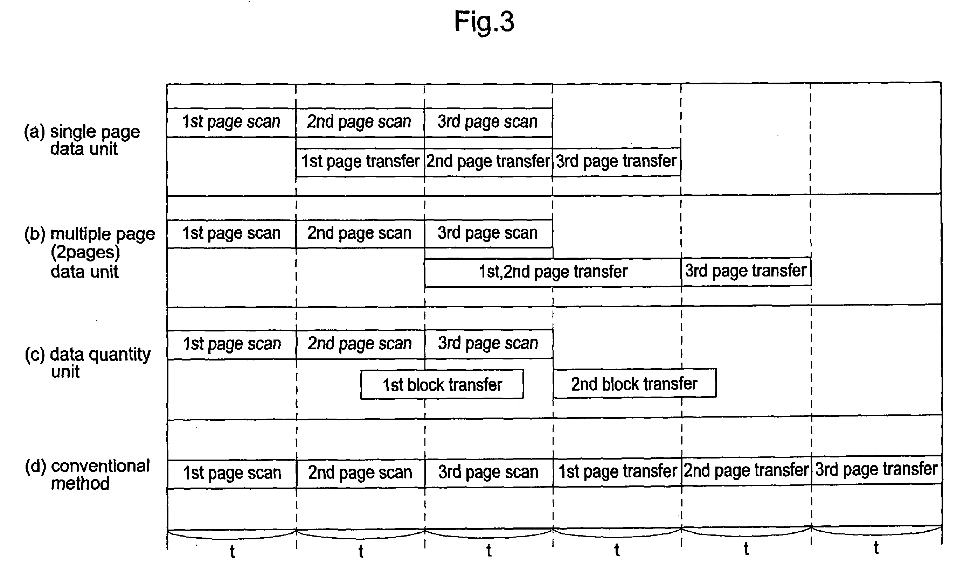

Figure 3 is a chart illustrating the scanning and transfer timing of the network scanner apparatus shown in Figure 2. The chart shows the scanning and transferring procedure applied to three same sized documents. In Figure 3, *'a'* represents the timing for scanning and transferring data by a single page data unit, *'b'* represents the timing for scanning and transferring data by a multiple page data unit, *'c'* represents the timing for scanning and transferring data by a predetermined data amount, and '*d*' represents the timing for scanning and transferring data by the conventional data image transmission method.

The scanning process blocks (for example, shown as "the 1^{st} page scan" in Figure 3) relate to scanning procedure of image data and indicate the time that elapses from scanning start until the scanned data is completely placed in memory 12. The transfer blocks (for example, shown as "the 1^{st} page transfer" in Figure 3) relates to transferring of scanned image data and indicate the time that elapses from the start of image data compression of image data to until data transfer is complete. The horizontal axis of the chart indicates the passage of time, and the length of each block indicates the time required for that specific process.

To provide a simplified explanation, each block of processing time is not illustrated as an exact, but rather an approximate amount of time. For example, the time required to scan the first page of the original document and the time required to send that single page of image data are each illustrated as processing time unit '*t*', but in reality the scanning and data transmission times would normally be different. Furthermore, the scanning time for each page will vary as a result of differences between color and monochrome documents and other reasons, and transmission times will differ as a result of differences in compressed image data amount, network condition, and other factors.

In regard to the conventional method shown by '*d*' in Figure 3, transfer of first page image data initiates only after the first, second, and third pages of the original document have been completely scanned. After that, the second and third page image data is sequentially transmitted. As a result, the time from scanning start to the completion of image data transfer is 6 x *t*.

Conversely, when applying the single page data unit transmission method described by the present invention, shown as timing line '*a*' in Figure 3, the first page of the original document is scanned. Then, scanning of the second page initiates simultaneously with transfer of the first page image data. After that, scanning of the third page initiates simultaneously with transfer of the second page image data. The process continues with transfer of the third page image data. Therefore, the time required from scanning start to the end of data transfer can be expressed as 4 x *t*.

The present invention also describes a method through which data can be transferred in multiple page units. This is illustrated as the 2-page data unit transmission shown in timing line '*b*' of Figure 3. In this process, the first and second pages of the original document are scanned. Then, transfer of data scanned from the first and second pages begins simultaneously with the scanning operation for the third page. In this example, as the number of pages is uneven, the image data for the third page is transferred separately after transfer of the first and second page image data is completed.

Moreover, the present invention also operates as shown at timing line '*c*' where the transferred data units are based on data amount. The amount of data is predetermined. In this method, the first page of the original document is scanned, and the second page is subsequently scanned until scanned image data reaches a predetermined data amount. After that, the transfer of scanned image data (the first data block) begins. After the third page has been scanned, the remaining data (the second data block) is transferred. In this case, the predetermined data amount should be set as a value which does not exceed capacity of memory 12 of scanner apparatus 1 shown in Figure 2, and is normally set as a value which is approximately equal to the capacity of memory 12.

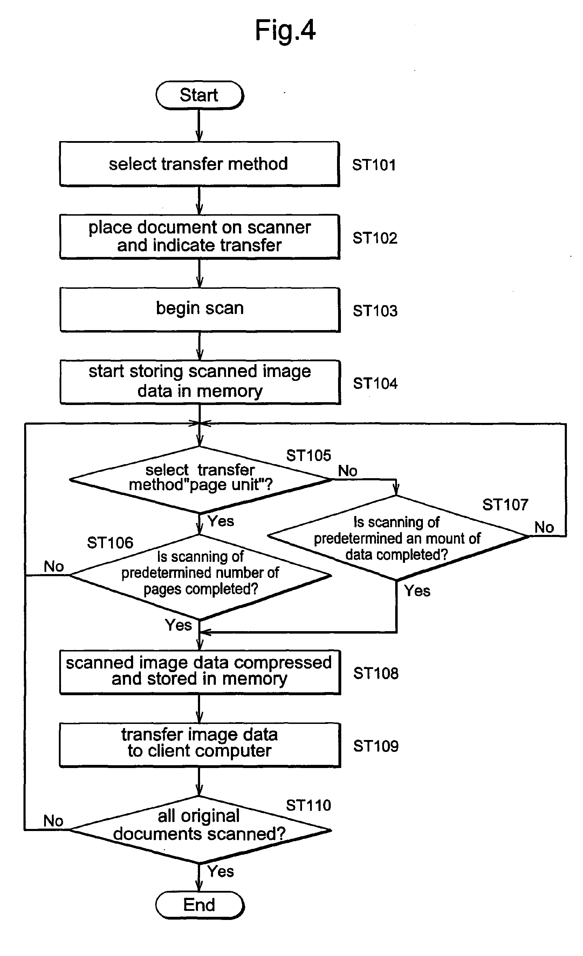

Figure 4 is a flow chart describing the operation of the network scanner apparatus shown in Figure 2. First, at Step 101, the operator uses a control key on control panel 20 to select the image data transfer method by choosing either [Page Unit] or [Data Amount Unit]. When [Page Unit] is selected as the transfer method, the number of pages of the transfer unit is entered. Conversely, when [Data Amount Unit] is selected, the data amount of the transfer unit is entered. At Step 102, the original document is placed on scanner 10, and the transfer destination is selected and indicated (in this case, client computer 3) at control panel 20. At Step 103, controller 18 receives the transmission instructions and instructs scanner 10 to begin the scanning operation. The data storage operation, through which the image data scanned by scanner 10 is transferred to and stored in memory 12, begins at Step 104.

The selected transfer method is determined at Step 105. When the [Page Unit] transfer method was selected at Step 101, the control sequence will go on to Step 106 where scanner 10 will perform the scanning operation for the number of pages that was entered by the operator. Conversely, when the [Data Amount Unit] transfer method was selected at Step 101, the control sequence will go to Step 107 where scanner 10 will perform the scanning operation until the predetermined amount of data has been obtained

In cases where Step 106 determines whether the scanning operation for the specified number of pages has completed, and in cases where Step 107 determines whether the scanning operation for the predetermined amount of data has completed, image processor 14, at Step 108, will execute the data compression operation for the scanned image data and then store the compressed data in memory 12. At Step 109, the compressed image data in memory 12 is sent to the transmission destination, which is client computer 3 in this case.

Step 110 will repeat the operations performed in Steps 105 through 109 until all pages have been scanned. Lastly, Step 110 will stop the operation of network scanner apparatus 1 when all pages have been scanned.

### Second Embodiment

The following will describe a second embodiment of the invention with reference to the attached drawings.

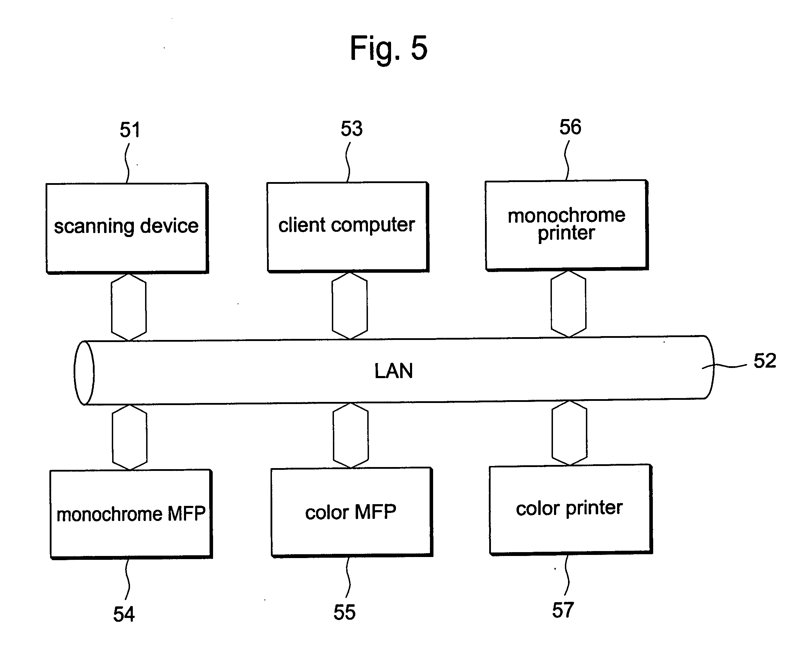

Figure 5 is a block diagram illustrating the structure of a network that includes the network scanning device. Network scanning device 51 is connected to client computer 53, monochrome MFP (Multi-Function Peripherals) 54, color MFP 55, monochrome printer 56, and color printer 57 through a network 52 such as an LAN (Local Area Network). Network scanning device 51 is able to communicate with devices 53∼57, through network 52, by using a predetermined communications protocol (for example, TCP/IP (Transmission Control protocol/Internet Protocol)). Network scanning device 51 is able to scan the original document image and send the scanned image data to the specified device, based on the processing operation to be applied to the scanned image data.

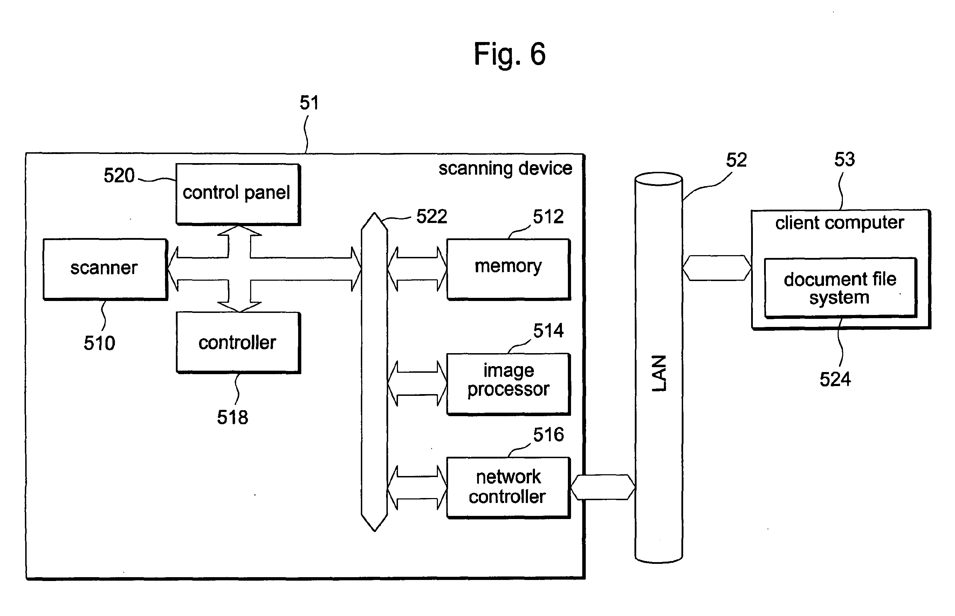

Figure 6 is a block diagram illustrating the general structure of the network scanning device and client computer shown in Figure 5. Network scanning device 51 includes scanner 510, memory 512, image processor 514, network controller 516, device controller 518, and control panel 520; each of the aforesaid main components being mutually connected through system bus 522.

Scanner 510 recognizes the type (color or monochrome), size, and number of pages of the original documents placed on the original document tray, and then optically and sequentially scans the documents for image data. Memory 512, which may be a flash memory, hard disk, or other like memory device, temporarily stores the image data scanned by scanner 510, and then stores the image data after pre-transfer processing (collection, data compression etc.) has been performed. Image processor 514 combines a predetermined number of pages of image data stored in memory 512 into a single page of image data, and then compresses the combined image data. The combining operation reduces and combines image data representing a predetermined number of pages (two pages, for example) into one page (containing the images from two pages reduced and arranged in alignment, for example). In some cases, however, the image will not be reduced, but only be combined, and in some cases it will be possible to obtain the combined image data that combines images onto a single sheet of paper, without reduction. Network controller 516 oversees the reception and transmission of command and communication control signals to and from a device connected to network 52. Device controller 518 is a CPU that controls and coordinates all of the above noted operations. Control panel 520 is equipped with control keys (i.e. numerical keypad and start key) that allow input of commands and operational settings by the operator, and a display (i.e. liquid crystal display) that provides various types of information.

Also, client computer 53 includes document file system 524 which is used to manage image data received from network scanning device 51 and which is able to execute various operations such as data processing and image display.

In cases where scanned image data from network scanning device 51 is to be sent to a destination specified as client computer 53, the original document is first placed on the scanning tray, image data (in bit units) is generated by scanner 510 scanning the document, and the image data is sent to and stored in memory 512. Next, the stored image data is combined and generated as combined image data for a predetermined number of pages, after which it is compressed into page units (i.e. monochrome images into JBIG (Joint Bi-level Image experts Group) format, and color images into JPEG (Joint Photographic coding Experts Group) format). Device controller 518 transfers the compressed and combined image data to client computer 53 through network controller 516 without waiting for scanner 510 to finish reading the images on all of the original document pages.

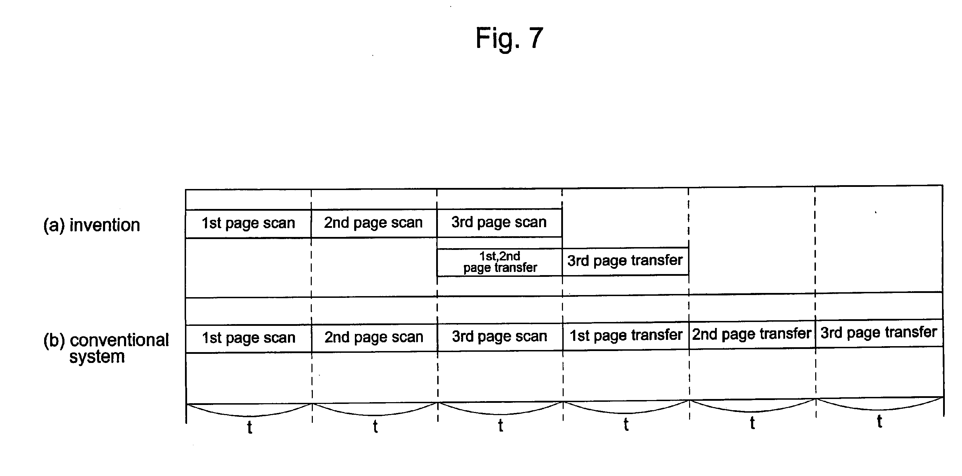

Figure 7 is a chart illustrating the scanning and transfer timing of the network scanning device shown in Figure 6. The chart shows the scanning and transfer procedure applied to images on a document of three uniformly sized pages in which the '*a*' time line represents the scanning and transmission method specified by the present invention, and the '*b*' time line represents the conventional method.

The scanning process blocks (each representing a single page scan in the diagram) show the scanning process of the original document image as the time that elapses from the start of image scan until the data is placed in memory 512. The transfer blocks (for a single page transfer as shown in the diagram) show the scanned image data transfer process as the time that elapses from the image data combining and compression processes until the completion of data transfer. In the diagram, the '*a*' time line represents the operation of the invention when image data from two pages is combined into a single page (a so-called "two into one" combination). The horizontal axis shows the passage of time, and the length of each block corresponds to a respective processing time segment.

To provide a simplified explanation, each block of processing time is not illustrated as an exact, but rather an approximate amount of time. For example, the time required to scan the first page of the original document and the time required to send that single page of image data are each illustrated as processing time unit '*t*', but the actual scanning and data transmission times would normally be different. Furthermore, the scanning time for each page will vary as a result of differences between color and monochrome documents and other reasons, and transmission times will differ as a result of differences in compressed image data quantity, network condition, and other factors.

In the *'b'* time line which represents a conventional data transfer method, the first, second and third pages are scanned before the scanning process is completed. After that, transfer begins for the first page data. This is followed, in sequence, by the transfer of data from the second and third pages until the data transfer operation is completed.

On the other hand, in the '*a*' time line which represents the transfer method applied by the network device of the present invention, the image data from the first and second pages are scanned after which that image data is combined and transferred concurrent with the scanning of the third page. This is followed by transfer of the third page of combined image data.

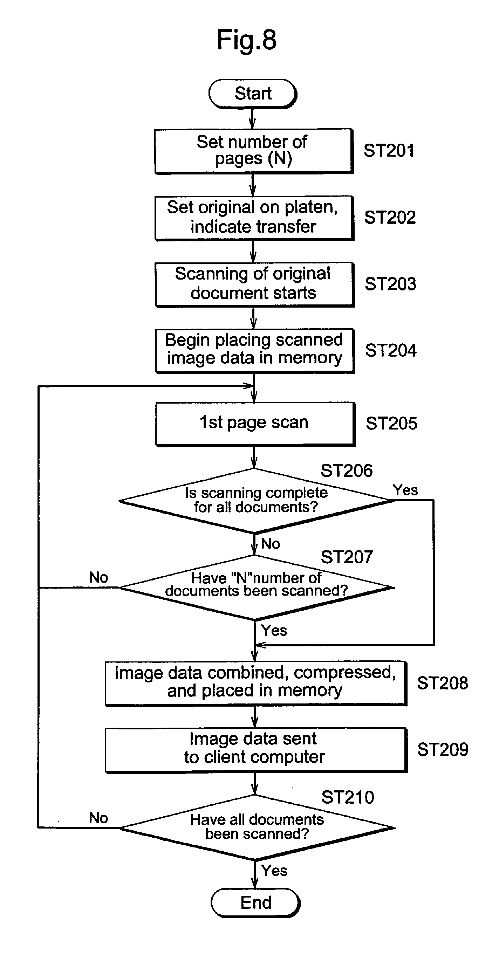

Figure 8 is a flow chart describing the operation of the network scanning device shown in Figure 6. First, at step ST201, the operator uses a control key on control panel 520 to specify the number of pages (N-pages) from which image data will be combined. At step ST202, the original document is placed on scanner 510, and the transfer destination (in this case, client computer 53) is selected at control panel 520 which executes the transfer. At step ST203, device controller 518 receives the transmission instructions and instructs scanner 510 to begin the scanning operation. The transfer and storage to memory 512 of image data scanned by scanner 510 begins at step ST204.

The image on one original document page is scanned at step ST205 after which it is determined, at step ST206, if all of the original document pages have been scanned. If all of the original document pages have not been scanned, the scanning operation is executed, at step ST207, for the preset "N" number of pages. When the "N" number of pages has been scanned, the image data from those pages is combined and generated into one page of collective image data which is then compressed and placed into memory 512 at step ST205. Conversely, if it is determined, at step ST206, that all of the original document pages have been scanned, because the number of remaining pages is less than the preset "N" number of pages, the image data from those pages is combined into one page of collective image data which is then compressed and placed into memory 512 at step ST208. Network controller 516 then transfers the compressed collective image, at step ST209, to the specified destination which is client computer 53.

The above-noted operation taking place from step ST206 through step ST209 is repeated at step ST210 until all of the original document pages have been scanned. Lastly, when it is determined, at step ST210, that all of the original documents have been scanned, the operation of network scanning device 51 terminates.

The foregoing embodiment has been provided for the purpose of explanation and is not to be construed as a limiting embodiment of the present invention. Changes may be made, by those familiar with the art, within the limits of the claims, without departing from the scope and spirit of the present invention. For example, the network scanning device invention is not limited to connection to a local area network as shown in Figure 5, but may be connected to other types of networks, and to other types of networks to which devices other than those shown in Figure 5 are connected. Moreover, the network scanning device invention is not limited to a single independent apparatus, but may be included in a multifunction apparatus that provides facsimile, printing, copying, and other functions.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention. For example, the network scanning device invention is not limited to connection to a local area network as shown in Figure 1, but may be connected to other types of networks, and to other types of networks to which devices other than those shown in Figure 1 are connected. Moreover, the network scanning device invention is not limited to a single independent device, but may be included in a multifunctional apparatus that provides facsimile, printing, copying, and other functions.

This application is based on the Japanese Patent Applications Nos. 2003-421330 filed on December 18, 2003 and 2003-421344 filed on December 18, 2003, entire content of which is expressly incorporated by reference herein.

## Claims

1. A scanner apparatus connected to a terminal device via a network, the scanner apparatus comprising:
a scanner configured to scan a plurality of documents, and to obtain image data of the plurality of documents;
a memory configured to store the obtained image data; and
a controller configured to begin transmitting the stored image data to the terminal device via the network, before the image data of all of the plurality of documents is stored in the memory.

2. The scanner apparatus according to claim 1, wherein the controller transmits the stored image data to the terminal device via the network in units of one page.

3. The scanner apparatus according to claim 1, wherein the controller transmits the stored image data to the terminal device via the network in units of a predetermined number of pages.

4. The scanner apparatus according to claim 1, wherein the controller transmits the stored image data to the terminal device via the network in units of a predetermined amount of the image data.

5. The scanner apparatus according to claim 1, further comprising a first transmission mode and a second transmission mode, the stored image data being transmitted in units of a predetermined number of pages in the first mode, and the stored image data being transmitted in units of a predetermined amount of the image data in the second mode,
wherein the controller transmits the stored image data to the terminal device in units of the predetermined number of pages when the first transmission mode is selected, and the controller transmits the stored image data to the terminal device in units of the predetermined amount of the image data when the second transmission mode is selected.

6. A control method for controlling a scanner apparatus, the scanner apparatus being connected to a terminal device via a network, the control method comprising:
scanning a plurality of documents;
obtaining image data of the plurality of documents;
storing the obtained image data in a memory; and
beginning transmitting the stored image data to the terminal device via the network, before the image data of all of the plurality of documents is stored in the memory.

7. A multi-function apparatus connected to a terminal device via a network, and configured to have a scanner function and at least one of a facsimile function, a copy function, and a printer function, the multi-function apparatus comprising:
a scanner configured to scan a plurality of documents, and to obtain image data of the plurality of documents;
a memory configured to store the obtained image data; and
a controller configured to begin transmitting the stored image data to the terminal device via the network, before the image data of all of the plurality of documents is stored in the memory.

8. A scanner apparatus being connected to a terminal device via a network and having a combing function, wherein, in the combining function, a predetermined number of pages of image data are combined into one page of image data, the scanner apparatus comprising:
a scanner configured to scan a plurality of documents, and to obtain image data of the plurality of documents, the plurality of documents being set on the scanner; and
a controller configured to combine the predetermined number of pages of the scanned image data into one page of image data, and to begin transmitting the combined image data to the terminal device via the network before the image data of all of the plurality of the set documents is scanned.

9. The scanner apparatus according to claim 8, wherein the controller concurrently performs scanning documents and transmitting the combined image data in units of the predetermined number of pages.

10. The scanner apparatus according to claim 8 further a panel to configured to designate the predetermined number of pages of image data to be combined, wherein the controller combines the predetermined number of pages of the scanned image data into one page of image data, based on the designated number of pages of image data.

11. A multi-function apparatus connected to a terminal device via a network, and configured to have a scanner fuction and at least one of a facsimile function, a copy function, and a printer function, the scanner function including a combing function, wherein, in the combining function, a predetermined number of pages of image data are combined into one page of image data, the multi-function apparatus comprising:
a scanner configured to scan a plurality of documents, and to obtain image data of the plurality of documents, the plurality of documents being set on the scanner; and
a controller configured to combine the predetermined number of pages of the scanned image data into one page of image data, and to begin transmitting the combined image data to the terminal device via the network before the image data of all of the plurality of the set documents is scanned.
